(19) Europäisches Patentamt
European Patent Office
Office européen des brevets

(11) **EP 3 812 105 B1**

(12) **EUROPEAN PATENT SPECIFICATION**

(45) Date of publication and mention of the grant of the patent:
**02.03.2022 Bulletin 2022/09**

(21) Application number: **20166522.1**

(22) Date of filing: **27.03.2020**

(51) International Patent Classification (IPC):
***B25J 9/16*** *(2006.01)*

(52) Cooperative Patent Classification (CPC):
**B25J 9/1697;** G05B 2219/37217;
G05B 2219/40532; G05B 2219/45104

(54) **ARTIFICIAL INTELLIGENCE ARCHITECTURE FOR INDUSTRIAL WELDING**

ARCHITEKTUR VON KÜNSTLICHER INTELLIGENZ FÜR INDUSTRIESCHWEISSEN

ARCHITECTURE D'INTELLIGENCE ARTIFICIELLE POUR SOUDAGE INDUSTRIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2019 EP 19205131**

(43) Date of publication of application:
**28.04.2021 Bulletin 2021/17**

(73) Proprietor: **Deutsche Telekom AG**
**53113 Bonn (DE)**

(72) Inventors:
• **PINSKER, Florian**
**1239 Wien (AT)**
• **JIANG, Beibei**
**80686 München (DE)**

(74) Representative: **Vossius & Partner**
**Patentanwälte Rechtsanwälte mbB**
**Siebertstrasse 3**
**81675 München (DE)**

(56) References cited:
**US-A1- 2015 001 196     US-A1- 2017 028 499**
**US-A1- 2018 349 527     US-A1- 2019 076 949**

**Description**

The present disclosure relates to a system and method for controlling a welding robot using different machine learning methods.

Welding is employed in various fields of technology, in particular using welding robots or other means of computer guided welding. However, in order to ensure durable and precise welding seams, the workpiece either has to be evaluated by a technician who then adapts the welding robot parameters accordingly or extensive laboratory tests have to be conducted to identify the optimal welding robot parameters. Both methods are cost and time consuming. It is therefore an object of the present disclosure to provide an improved system and method that quickly optimises the welding robot parameters to a degree not possible with previous approaches.

US 2017/028499 A1 discloses a machine learning device, an arc welding control device, an arc welding robot and a welding system.

The invention is defined in the independent claims. Preferred embodiments are defined in the dependent claims.

In particular, the object is achieved by a computer-implemented method for controlling welding performed by a welding according to independent claim 1.

Various embodiments may preferably implement the following features:
Preferably, the machine learning model is a reinforcement learning, RL, model.

Preferably, the method further comprises, after or during using the modified operating data to control the welding robot, obtaining new operating data of the welding robot and obtaining new image data of a welded workpiece and processing the newly obtained operating data and the newly obtained image data according to the method described above after obtaining operating data and image data. In other words, after or during using the modified operating to control the welding robot, new operating data of the welding robot and obtaining new image data of a welded workpiece is obtained. The newly obtained image data are processed to determine amended parameters of the welded workpiece and the amended parameters are processed to redetermine the quality of the welded workpiece by rating the amended parameters using the scoring function,
The parameters of the welded workpiece preferably comprise the type of welding and/or geometric parameters. More preferably, the parameters of the welded workpiece comprise at least one of width of the weld, penetration depth of the weld, notches on the surface and/or in the weld, pores on the surface or in the weld and time consumed for the welding process. In other words, at least one of the following is used as a classifier for the machine learning model to classify the score of the welding process: width of the weld, penetration depth of the weld, notches on the surface and/or in the weld, pores on the surface or in the weld and time consumed for the welding process.

The scoring function in claims 1 and 11 is determined by the means of a generalized sum:

$$S = \sum_{i=1,\dots,N} a_i(S_1, \dots, S_N) S_i$$

where:

S is the score;
$S_i$ denotes the parameter;
$a_i$ denotes a respective coefficient used for weighting the parameter; and
N denotes the number of used parameters.

Preferably, $a_i$ may be a positive constant.

Preferably, $a_i$ is a constant.

Preferably, $a_i$ is dependent on at least one of the parameters $S_i$ and/or another constant aj.

The image data and/or the operating data may be processed using filtering and/or pre-processing. Preferably, simulated data generated by a virtual welding process are used to process the image data and/or operating data.

The image data are preferably associated with the operating data, preferably before processing the image data. The welding may be laser welding.

Preferably, a type of weld is classified and a quality of the type of weld is classified subsequently using the parameters of the welded workpiece. The data used for the scoring function may preferably be generated by simulation.

The disclosure also relates to a system for controlling a welding robot 2. according to independent claim 11.

Various embodiments may preferably implement the following features:
The machine learning model is a reinforcement learning, RL, model. The model is preferably used to optimise the welding robot's behaviour.

The machine learning model, preferably for quality assessment, is preferably a deep learning, DL, model.

Preferably, the evaluation unit is further configured to determine the quality of the welded workpiece depending on the type of welding and/or geometric parameters. The evaluation unit is preferably configured to determine the quality of the welded workpiece by at least one of width of the weld, penetration depth of the weld, existence of notches, existence of pores and time consumed for the welding process.

The camera unit is preferably configured to capture new image data of the welded workpiece. The machine learning unit may be configured to obtain new operating data of the robot after the control unit used the modified operating data to control the welding robot. The evaluation unit is preferably configured to obtain the new image data from the camera unit to determine amended parameters of the welded workpiece and process the amended parameters to redetermine the quality of the welded workpiece by rating the amended parameters using the scoring function. The machine learning unit is preferably further configured to obtain new operating data of the robot and to obtain the new results of the scoring function after the control unit used the modified operating data to control the welding robot, and apply the new result of the scoring function to the operating data to remodify the operating data to improve the welding. The control unit is preferably configured to use the remodified operating data to control the welding robot.

The scoring function may preferably be set in advance.

The machine learning model for optimising the welding robots behaviour preferably is a reinforcement learning, RL, model.

Since it is inherent in learning that mistakes may occur, workpieces may be welded badly and thus sorted out. This leads to decreased efficiency and productivity and produces costs. Thus, according to a preferred embodiment, an initial model is trained under laboratory conditions which is then optimised during the production process. According to a preferred embodiment, in order to minimise the rejects, limits of exploration of the machine learning model should be set in advance. Thus, when the robot is allowed to train the test environment, i.e. under laboratory conditions, the exploration limits can be widened.

Optimising the behaviour of a welding robot automatically with the suggested method and/or system leads to higher precision of the weld and thus less outage. Another advantageous effect is that the weld also exhibits better qualities as the parameters of the robot optimize along this direction.

Currently in the prior art, the parameters of a welding robot are set by employing a few tests before using the robot in production. The suggested method enables an automatic evidence-based (i.e. by camera and/or internal robot state tracking) improvement of the robot parameters. In particular, optimisation of the weld is achieved without antecedent tests under laboratory conditions and with minimal human interference.

Furthermore, according to the present disclosure, even during production parameters can be optimized on-line even further due to slight exploration of the robot's strategy. Thus, the proposed system and method are a key step in the direction of self-optimising factories.

Advantageous technical effects according to the present disclosure are improved quality of the weld, i.e. strength, reliability etc. due to improved welding. Furthermore, less material and energy are consumed while welding, particularly due to the fact that less rejections may be produced. The automated optimisation also leads to a speed-up of the welding process.

The invention is further described by the appended drawings.

Fig. 1 is a flowchart of a method according to an embodiment of the present disclosure,
Fig. 2 shows a flowchart of a method according to an embodiment of the present disclosure,
Figs. 3 shows a schematic diagram of a method according to an embodiment of the present disclosure,
Fig. 4 is a schematic diagram of a system according to an embodiment of the present disclosure, and
Fig. 5 shows a schematic diagram of a method according to an embodiment of the present disclosure.

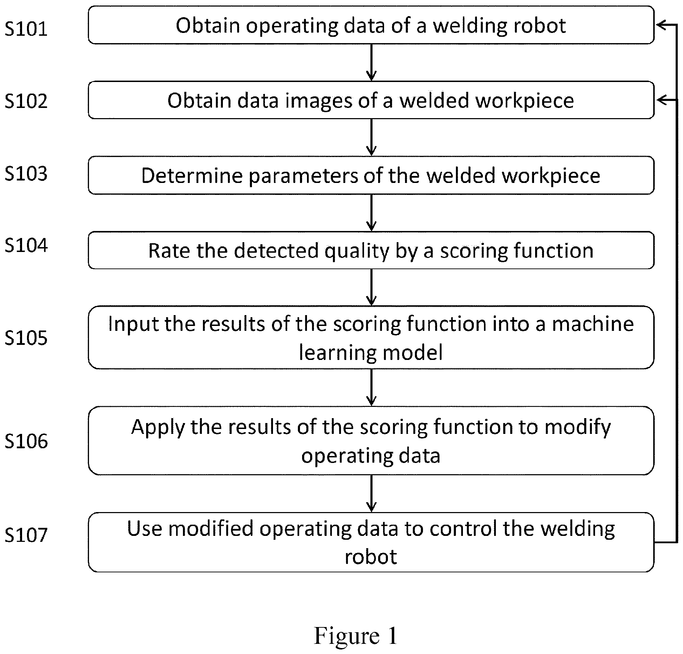

Figure 1 is a flowchart showing a method according to a preferred embodiment of the disclosure. In particular, figure 1 shows a computer-implemented method for controlling welding performed by a welding robot.

In S101, operating data of the welding robot is obtained. The operating data preferably comprise at least one of movement data, i.e. translatory and/or rotational data, temperature, atmosphere, power, angle with respect to the workpiece and time consumed for the welding process.

In S102, image data of a welded workpiece are obtained. It is understood by the skilled person that the order of S101 and S102 is interchangeable and can also be processed in parallel. The image data preferably is image or video (data) captured by a camera unit/camera.

In S103, the image data is processed to determine parameters of the welded workpiece. The parameters preferably refer to the welding seam and comprise at least one of width, penetration depth, notches, pores and time consumed for the welding process.

In S104, the parameters are processed to determine a quality of the welded workpiece by rating the parameters using a scoring function. The scoring function preferably is a generalised weighted function. A preferred embodiment of a generalised weighted function will be described below. The determination of the quality of the welded workpiece is preferably determined based on the occurrence and/or quantity of defects of the welding.

In S105, the results of the scoring function are input into a machine learning model, preferably of type RL (reinforced learning). Preferably, the machine learning model comprises an initial set of operating data of the welding robot. This initial set may preferably be the set obtained in S101 or may be an initial set which has been trained in a previous step.

In S106, the results of the scoring function are applied to the obtained operating data to modify said operating data.

In S107, the modified operating data are used to control the welding robot.

The process with the modified parameters is then again monitored and the obtained image and movement data is fed into the aforementioned workflow again (S101 and SI02).

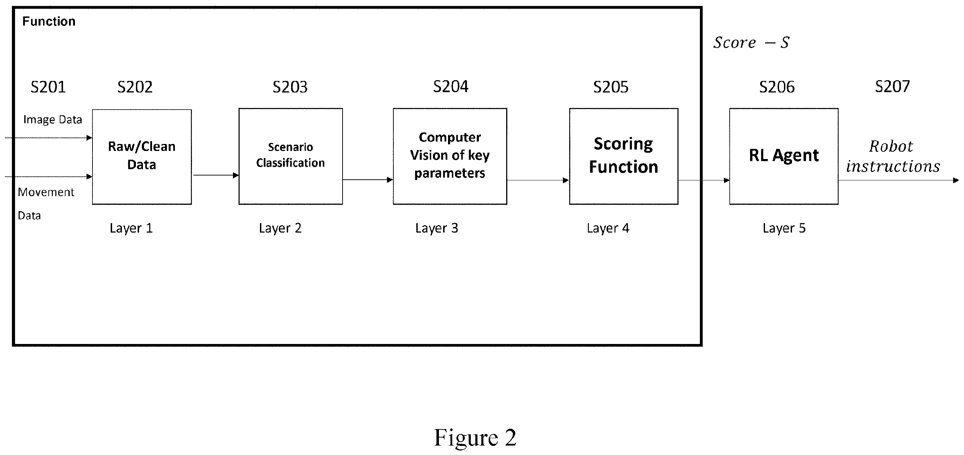

Figure 2 is a flowchart showing a method according to a preferred embodiment of the present disclosure. The method may be deployed in any welding facility comprising a welding robot and a camera system for capturing images of the welded workpiece. The method applied to industrial welding will be described in the following.

In S201, raw data from the camera and/or movement data from the welding robot are fed into the system. In S202, layer 1 of the proposed method is formed by processing the raw data to clean data. Raw data may thereby refer to any data which has not been subject to further processing such as filtering and clean data may therefore refer to data which underwent pre-processing and or filtering. In other words, raw data may be a raw image, a jpg image or any other type of captured image and movement data or trajectories, respectively. Also, video data may be obtained capturing the welding process. The video data may then be transformed into clean data to enhance details on the workpiece and the weld. The raw data may thus be subject to pre-processing and/or filtering.

In S203 (layer 2), a scenario classification is performed. Furthermore, simulated data, i.e. data generated by a virtual welding process, may also be added to the scenario classification data. The scenario classification data comprises information on the welding seam such as width, penetration depth, notches, pores (on the surface as well as within the weld) and the time consumed for the welding process. A single parameter or a combination of at least two of the parameters listed above may be used. Other parameters may also be appropriate. The data may for example be obtained by an edge detection algorithm analysing the raw image data. A transformation may be applied to the image or video data to obtain an intensity profile. The intensity profile may have a range from 0...1 and provide information on edges or abrupt transitions in the workpiece.

In S204, the processed scenario classification data, particularly the key parameters, is then analysed by a computer vision which detects and classifies the image data (layer 3). In particular, the classification is directed towards quality of the weld. The computer vision may take into account two kinds of classification data. On one hand, situation data such as the type of weld, i.e. bent or linear, and on the other hand geometric parameters such as width, penetration depth, pores, and other information may be utilised.

In S205, the classifiers are then fed into a scoring function (layer 4). The scoring function may be a generalised weighted scoring function. Generalised weights allow implementing not acceptable (hereinafter also referred to as "no-go") and (strongly) favourable results in contrast to a fixed weighted average. A notch in the weld for example may not be rated and weighted accordingly but directly lead to rejection of the workpiece since it makes the workpiece unusable. This would then be an example of an unacceptable/ not acceptable result.

The function may be a weighted sum of the parameters identified above. According to the present embodiment, a higher score may indicate a higher quality of the weld. A scoring function with respect to Fig. 2 may for example read

$$f(K,R) = f^{(5)}\left(f^{(4)}\left(f^{(3)}\left(f^{(2)}\left(f^{(1)}(K,R),K,R\right),K,R\right),K,R\right),K,R\right) \rightarrow Robot\ instructions$$

wherein K is the camera data and R is the state and action data of the robot, in other words movement data.

In S206, the results of the scoring function are input into a machine learning algorithm (hereinafter also referred to as "RL Agent"). The machine learning algorithm may comprise an initial training set obtained under laboratory conditions or by conducting the welding process in the production site. The machine learning algorithm may for example be a reinforcement learning (RL) algorithm. Depending on the result of the scoring function, a machine learning agent modifies the robot parameters, i.e. the operating data, such as, according to a preferred embodiment, movement trajectories, atmosphere, temperature, $CO_2$ content, power and/or angle with respect to the workpiece. Movement trajectories may be defined by translatory movements as well as rotational movements. The machine learning model may also be capable of detecting the type of weld by analysing the image data. Thus, a curved, linear or zigzag pattern may exemplarily be detected without further information. Optionally, the movement data and other parameters, i.e. operating data, the robot may be provided to indicate the type of weld. After classification of the type weld, the quality of the weld may subsequently be classified. Therefore, at least one of the parameters indicated above may be used.

The image data may be associated with the movement data of the welding robot.

In S207, the modified operating data is used to control the welding robot.

The process with the modified parameters is then again monitored and the obtained image and movement data is fed into the machine learning algorithm again to further improve the welding results. Thus, the system controls itself with respect to quality and aims at optimising the robot parameters and hence the welding process.

Thereby, an autonomous system for optimising parameters of the welding robot to achieve an optimal weld is obtained.

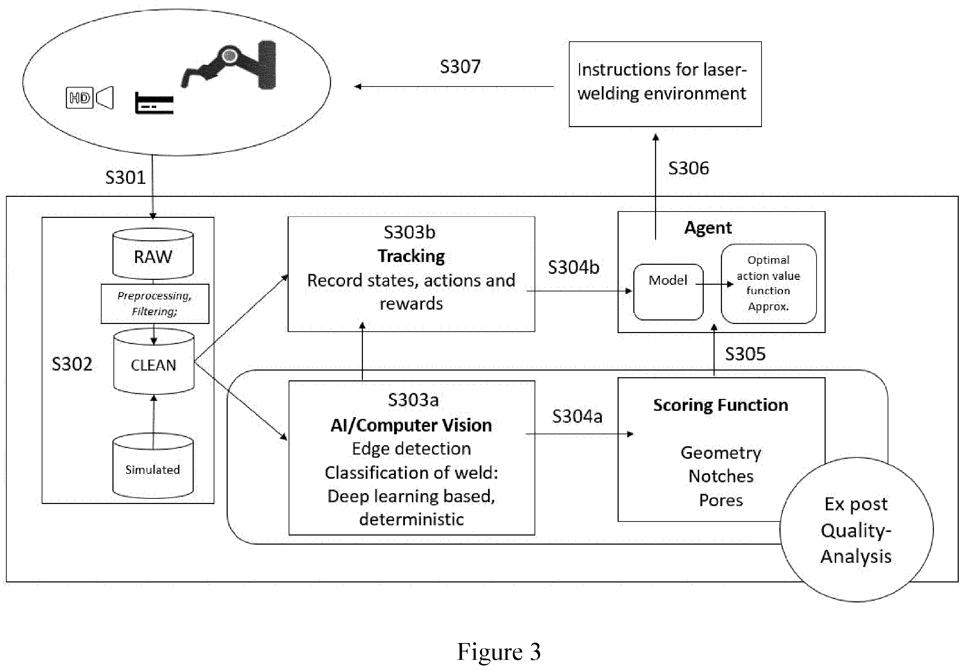

Fig. 3 shows a schematic diagram of a method according to a preferred embodiment of the present disclosure. In S301, camera and robot data are obtained and in S302, pre-processing and/or filtering of the obtained data is performed. Simulated data generated by a virtual welding process may preferably also be used in S302 to obtain clean data (scenario classification according to Fig. 2). The data is then used for tracking in S303b, i.e. record states, actors and rewards, and for the classification of a weld in S303a preferably using computer vision. The computer vision may deploy artificial intelligence (AI). The results are then fed into a scoring function (S304a). Scoring function is then input into a machine learning agent (S305). In addition, the tracking data might also input into the machine learning agent (S304b). The agent comprises an initial model and uses the newly fed data for an approximation of an optimal action value function. The function is then used to modify the instructions for the welding environment (S306). The new instructions are then used to control and instruct the welding robot (S307). Hence, a loop is created which allows optimising the welding parameters by machine learning. Thereby a quality optimisation, faster processes, higher degree of industrialisation and/or automatisation and reduced energy consumption is achieved.

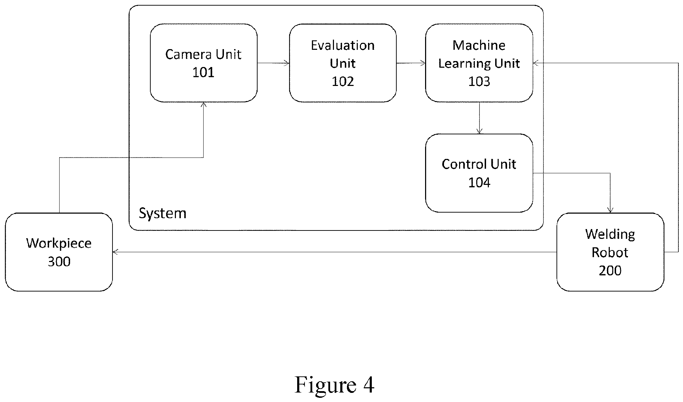

Fig. 4 shows a system for controlling a welding robot 200 according to a preferred embodiment of the present disclosure. The system comprises a camera unit 101, an evaluation unit 102, a machine learning unit 103 and a control unit 104. The camera unit 101 captures image data of a welded workpiece 300. The evaluation unit 102 obtains image data from the camera unit 101 and determines parameters of the welded workpiece (300) using said image data. The evaluation unit then processes these parameters to determine the quality of the welded workpiece. This is done by rating the parameters using a scoring function. A preferred embodiment of the scoring function will be described in detail below. The machine learning unit 103 obtains operating data of the robot 200 and obtains the scoring function. The operating data is directly obtained from the robot 200 according to a preferred embodiment or is obtained from previous training step according to another preferred embodiment. The machine learning unit 103 then applies the scoring function to the operating data to modify the operating data to improve the welding. The control unit then uses the modified operating data to control the welding robot 200.

The machine learning model preferably is a reinforcement learning, RL, model. The evaluation unit 102 may further be configured to determine the quality of the welded workpiece 300 depending on the type of welding and/or geometric parameters. The evaluation unit 102 is preferably configured to determine the quality of the welded workpiece 300 taking at least one of width, penetration depth, notches, pores and time consumed for the welding process into consideration. The scoring function may preferably be a generalised weighted scoring function.

According to a preferred embodiment, the final score, i.e. the scoring function that is the input for the RL Agent, i.e. for the machine learning, is determined by the means of the following generalized sum

$$S = \sum_{i=1,\dots,N} a_i(S_1,\dots,S_N)S_i$$

where:

S is the score;
$S_i$ denotes the parameter;
$a_i$ denotes a respective coefficient used for weighting the parameter; and
N denotes the number of used parameters.

This will be described by using the following preferred embodiment, where $S_1$ is the weld width, $S_2$ detected splatter and $S_3$ detected pores.

The three input scores are considered:

$S_1$ = 1, indicating that the weld width is perfect,
$S_2$ = 1, indicating that no splatter has been detected,
$S_3$ = 1, indicating that no pores were detected.

The coefficients would thus sum up with the positive constants $a_i$ according to

$$S = a_1 S_1 + a_2 S_2 + a_3 S_3 = 1.$$

If logical no-go situations, i.e. not acceptable situations represented by the respective parameter, e.g. defects that inevitably lead to dismissal of the workpiece, occur, this may also be accounted for by the algorithm.

The following scenario is considered according to a preferred embodiment.

$S_1$ = 0.7, indicates that the weld width is good,
$S_2$ = 0, indicates that splatter has been detected,
$S_3$ = 1, indicates that no pores were detected.

As some factors, e.g. splatter, indicate with high accuracy that the weld cannot be further used, the generalised sum should yield

$$S = a_1 (S_2 = 0) S_1 + a_2 S_2 + a_3 S_3 = 0$$

Implying that $a_1(S_2 = 0) = 0 = a_3(S_2 = 0)$.

This example according to a preferred embodiment shows that it may technically make sense that for welding the scoring function of the weld can be modelled to include no-go scenarios as well as weighted sums of different factors. In the present case, $S_2$ = 0 sets all $a_i$ = 0, thereby leading to a dismissal of the workpiece since the detected splatter makes it unusable.

Furthermore, the scoring function may distinguish e.g. if a bend is welded or a straight line. This can e.g. be accounted for by the welding scenario parameter mentioned above. For example, the width of a weld might be more important when welding a curve rather than a straight line.

In order to obtain the parameters $S_i$ computer vision and/or the internal robotic tracking functions may be utilised. Computer vision, e.g. based on trained neural nets, enable the robot to make quality assessments. A deep learning network may for example be able to track visible pores or to determine the width of a weld.

The width of the weld is set by the engineer designing the workpiece. Any deviation with certain limits will lower the ideal score for the weld width, which is 1. Similar considerations can be made for the other factors and thus will not be discussed further.

Training is achieved by feeding an artificial intelligence with the score. Preferably, a reinforcement agent, RL agent, is employed for this purpose. The agent gets a reward once the welding is better than the previous score, thereby autonomously improving the welding parameters and the resulting weld. Preferably, the scoring function is set in advance.

The working principle will be further discussed using the following preferred embodiment. The automated welding, e.g. laser welding, is performed by at least one robotic arm. The robotic arm may be connected to a controller and/or a server and/or a network. Also, sensors may be used in order to monitor parameters of the robotic arm in addition to controlling of the arm itself. At least one camera may be employed. The camera may e.g. be placed on the robotic arm or in the surrounding of the welding spot.

To train the robotic arm to do a better welding work, reinforcement learning will be applied (see above). The process might comprise the following steps.

Performing the welding and taking an image of the resulting weld. The quality of the welding will be estimated or predicted by passing the image to a trained Deep Learning neural network. The quality can be a set of parameters as mentioned above, for example, welding width, penetration depth and existence of notches or pores.

By using the scoring function, a score for the weld is marked. Subsequently, a reward is defined and returned to the robotic arm or the controller thereof, respectively. For this example, a scale from 0 to 1 will be used. If, e.g., the welding score is close to a certain number, like 0.9, the welding is perfect, and the reward given is 10. If the welding score is under 0.5, the reward given is -10. If the welding score is between 0.5 to 0.9, the reward may be 5. If the welding is not done, reward is 0. The reward may also be adapted according to the time spent for the welding process. Based on the reward, the robotic arm can update the learning processes and then learn by running multiple, e.g. a million to billion times.

Alternatively, the scaled score of the scoring function, which is a number between 0 and 1, can be used to model a reward as follows. If the score is larger than the score from the previous run, the RL agent gets a reward and if it is lower it gets a negative reward (punishment).

Finally, a reward may be defined by the magnitude the score differs from the previous score and the reward can be proportional or a monotonically increasing function thereof.

Depending on the used reinforcement learning algorithms, the learned information can be saved in a learning table (Q table) or neural networks. Later, the robotic arm can use this information to improve the welding performance.

Before the reinforcement learning environment is conducted to train the agent, preferably the quality prediction is performed. This means an image recognition project will be conducted, where a lot of welding images will be collected. The welding image data will be trained e.g. by Deep Learning (deep neural networks). The output layer will be e.g. the deviation of the welding width from a ground truth, an assessment of the if penetration depth has been achieved, if notches have been detected, if pores have been detected or further parameters. The parameters may be a continuous number, e.g. width in cm, or discrete/categoric number, e.g. 1 or 0 meaning having pores or not. The deep neural networks used in the present example can be but are not limited to CNN (Convolutional Neural Networks). Deep learning and variations thereof are a feasible method to do quality assessment in pictures as they are able to categorize optical patterns and to assess positions of objects within pictures to a degree that is beyond human capabilities.

When the neural networks for quality assessment are trained with a high accuracy, they will be used during the reinforcement learning construction. Ideally, the RL environment contains a robotic arm as an agent, the material to weld, and a camera to capture the welding status.

According to an aspect of the present disclosure, a scoring function enables the usage of artificial intelligence, e.g. reinforcement learning, to improve the welding robotics' performance. The whole picture after training of the artificial intelligence would be that the Camera unit feeds the visual (trained) evaluation unit which then forwards data to the response unit.

After the above process is built, the robotic needs to be trained, which refers to the second artificial intelligence or the reinforcement learning (RL) part.

During training, a process flow might look like the following: Camera unit collects data and feeds the data into the RL algorithms. Then, action is taken, i.e. the robot is moved, and said action is evaluated. In a final step, the action is adjusted if necessary.

The evaluation contains the scoring function. The scoring function includes specific welding related parameters. Each of the welding parameters can be from one trained supervised machine learning model.

The training for the machine learning part can be static. Thus, a set of image data is collected and labeled with our intentions. Subsequently, a machine learning (ML) model is built and trained in order to get the (math) parameters of the ML model.

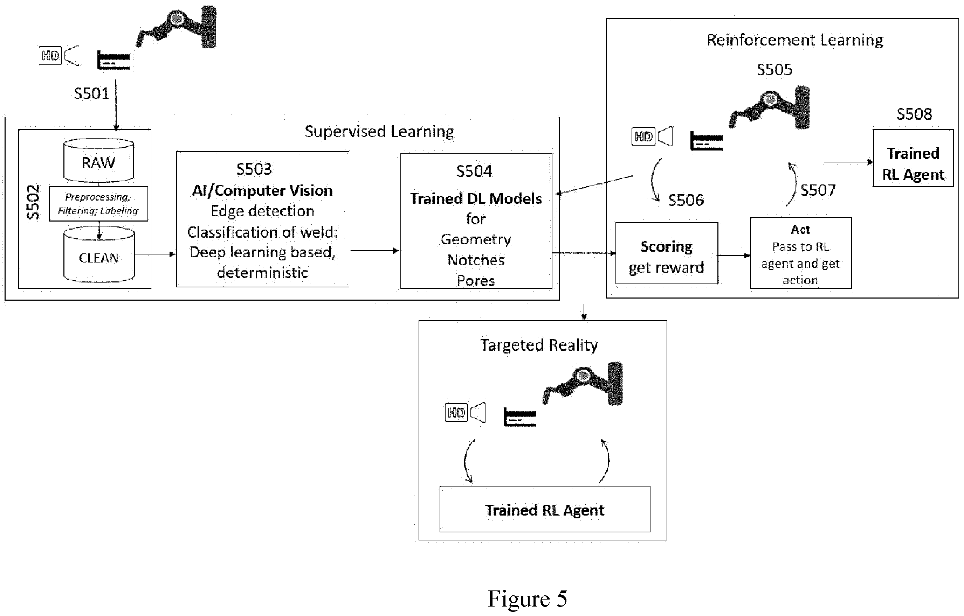

Fig. 5 shows a schematic diagram of a method according to an embodiment of the present disclosure. A welding robot performs a weld according to an initial data set or the present data set. In a subsequent step, a collected image data set is loaded (S501). The raw data is preprocessed, filtered and labeled to obtain clean data as has been discussed above (S502). A trained AI/computer vision step then performs e.g. edge detection and pore classification of the weld (S503). This may be based on deep learning (DL) and/or deterministic. This constitutes the supervised learning part of the architecture. Chronologically the training of the quality assessment must be done before training the RL agent (S504) that improves the behaviour of the robotic arm.

A welding robot performs a weld action and the camera captures the welding status (S505). The image data, as well as the monitored robot's parameters if necessary, is fed into the models, which were trained potentially with supervised learning. The results of the already trained models are fed into a scoring function (S506). The score returned by the scoring function decides the reward, which is passed on to the robot as the feedback of its current behavior (set of parameters) then and, if applicable or necessary, the welding parameters are adjusted by RL learning to receive a better feedback next time (S507). It means the welding process is then performed with the new set of parameters and the result is again fed back into the models. After repeating the process, e.g. up to billions of times, the agent (robot) can learn and gain enough experience to perform a high quality of welding. Thereby, a trained RL agent (robot) is obtained (S508). This constitutes the reinforcement learning (RL).

Supervised learning and reinforcement learning both synergistically aim to provide optimal welding results, i.e. the targeted reality. Supervised learning provides the necessary information to feed into the scoring function. Reward system, as the environment response in the communication with robot behavior (action), is built according to the scores as part of reinforcement learning. Hence, in summary the state of the weld is fed into the trained RL agent (robot) which then adapts the parameters of the robot in order to improve the weld. The system is thus constantly self-improving.

Thus, a method and system are provided which perform a weld by a welding robot, determines the quality of the weld by rating classifying parameters it using a scoring function and uses artificial intelligence design in which the scoring process is based on the information provided by the machine learning or deep learning models and the result of the scoring function is utilized to adjust the robot action to improve welding parameters. The trained ML/DL models, the designed scoring system, and the trained RL agent are thus used to control the robot. This may be seen as an autonomous trial and error procedure with boundaries set by operators in advance. The boundaries may constitute parameter values which the welding robot may not exceed or fall below. This may be movement parameters or other welding parameters as indicated above.

The welding process may also be simulated by a computer program in order to improve the parameters.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

**Claims**

1. A computer-implemented method for controlling welding performed by a welding robot (200), the method comprises the following:

   a) obtaining operating data of the welding robot (200) during welding,
   b) obtaining image data of a welded workpiece,
   c) processing the image data to determine parameters of the welded workpiece,
   d) processing the parameters to determine a quality of the welded workpiece by rating the parameters using a scoring function,
   wherein the scoring function is a generalised weighted scoring function

$$S = \sum_{i=1,...,N} a_i(S_1, ..., S_N)S_i$$

   wherein S is a result of the scoring function, $S_i$ denotes the parameters, $a_i$ denotes a respective coefficient for weighting the parameter, and N denotes the number of parameters, N being an integer, and
   e) inputting the result of the scoring function into a machine learning model;
   f) applying, using the machine learning model, the result of the scoring function to the obtained operating data to modify said operating data to improve the welding; and
   g) using said modified operating data to control the welding robot (200).

2. Method according to claim 1, wherein the machine learning model is a reinforcement learning, RL, model.

3. Method according to claim 1 or 2, further comprising:
   h) after or during g), obtaining new operating data of the welding robot (200) and obtaining new image data of a welded workpiece and processing the newly obtained operating data and the newly obtained image data according to c) to h).

4. Method according to any one of the preceding claims, wherein the parameters of the welded workpiece comprise the type of welding and/or geometric parameters, preferably comprise at least one of width of the weld, penetration depth of the weld, notches in the weld, pores on the surface and/or in the weld and time consumed for the welding process.

5. Method according to any one of the preceding claims, wherein the scoring function is set in advance.

6. Method according to any one of the preceding claims, wherein the image data and/or the operating data are processed using filtering and/or pre-processing; and
   wherein preferably simulated data generated by a virtual welding process are used to process the image data and/or operating data.

7. Method according to any one of the preceding claims, wherein the image data is associated with the operating data, preferably before processing the image data.

8. Method according to any one of the preceding claims, wherein the welding is laser welding.

9. Method according to any one of the preceding claims, wherein a type of weld is classified and a quality of the type of weld is classified subsequently using the parameters of the welded workpiece.

10. Method according to any one of the preceding claims, wherein the data used for the scoring function is generated by simulation.

11. System for controlling a welding robot (200), the system comprising:

   a camera unit (101),
   an evaluation unit (102),
   a machine learning unit (103), and a
   control unit (104)
   wherein the camera unit (101) is configured to capture image data of a welded workpiece (300),
   wherein the evaluation unit (102) is configured to obtain the image data from the camera unit (101) to determine parameters of the welded workpiece (300) and process the parameters to determine a quality of the welded workpiece (300) by rating the parameters using a scoring function,
   wherein the scoring function is a generalised weighted scoring function

$$S = \sum_{i=1,\dots,N} a_i(S_1, \dots, S_N)S_i$$

   wherein S is a result of the scoring function, $S_i$ denotes the parameters, $a_i$ denotes a respective coefficient for weighting the parameter, and N denotes the number of parameters, N being an integer,
   wherein the machine learning unit (103) is configured to obtain operating data of the robot (200), to obtain the result of the scoring function and apply the result of the scoring function to the operating data to modify the operating data to improve the welding; and
   wherein the control unit (104) is configured to use the modified operating data to control the welding robot (200).

12. System according to claim 11, wherein the machine learning model is a reinforcement learning, RL, model.

13. System according to claim 11 or 12, wherein the evaluation unit (102) is configured to determine the quality of the welded workpiece (300) dependent on the type of welding and/or geometric parameters, wherein the evaluation unit (102) is preferably configured to determine the quality of the welded workpiece (300) by at least one of width of the weld, penetration depth of the weld, existence of notches, existence of pores and time consumed for the welding process.

14. System according to any one of claims 11 to 13,

   wherein the camera unit (101) is configured to capture new image data of the welded workpiece and the machine learning unit (103) is configured to obtain new operating data of the robot (200) after or during the control unit used the modified operating data to control the welding robot (200),
   wherein the evaluation unit (102) is configured to obtain the new image data from the camera unit (101) to determine amended parameters of the welded workpiece (300) and process the amended parameters to redetermine the quality of the welded workpiece (300) by rating the amended parameters using the scoring function,
   wherein the machine learning unit (103) is configured to obtain new operating data of the robot (200) and to obtain the new results of the scoring function after or during the control unit used the modified operating data to control the welding robot (200), and apply the new result of the scoring function to the operating data to remodify the operating data to improve the welding; and
   wherein the control unit (104) is configured to use the remodified operating data to control the welding robot (200).

15. System according to any one of claims 11 to 14, wherein the scoring function is set in advance.

**Patentansprüche**

1. Computerimplementiertes Verfahren zum Steuern von Schweißen, das von einem Schweißroboter (200) durchgeführt wird, wobei das Verfahren das Folgende aufweist:

   a) Erhalten von Betriebsdaten des Schweißroboters (200) während des Schweißens,
   b) Erhalten von Bilddaten eines geschweißten Werkstücks,
   c) Verarbeiten der Bilddaten, um Parameter des geschweißten Werkstücks zu bestimmen,
   d) Verarbeiten der Parameter, um durch Bewerten der Parameter unter Verwendung einer Bewertungsfunktion eine Qualität des geschweißten Werkstücks zu bestimmen,
   wobei die Bewertungsfunktion eine verallgemeinerte gewichtete Bewertungsfunktion ist

$$S = \sum_{i=1,\dots,N} a_i(S_1, \dots, S_N) S_i$$

   wobei S ein Ergebnis der Bewertungsfunktion ist, $S_i$ die Parameter bezeichnet, $a_i$ einen jeweiligen Koeffizienten zum Gewichten des Parameters bezeichnet, und N die Anzahl der Parameter bezeichnet, wobei N eine ganze Zahl ist, und
   e) Eingeben des Ergebnisses der Bewertungsfunktion in ein Maschinenlernmodell;
   f) Anwenden des Ergebnisses der Bewertungsfunktion auf die erhaltenen Betriebsdaten unter Verwendung des Maschinenlernmodells, um die Betriebsdaten zu modifizieren, um das Schweißen zu verbessern; und
   g) Verwenden der modifizierten Betriebsdaten, um den Schweißroboter (200) zu steuern.

2. Verfahren nach Anspruch 1, wobei das Maschinenlernmodell ein verstärkendes Lern-, RL, Modell ist.

3. Verfahren nach Anspruch 1 oder 2, das ferner aufweist:
   h) nach oder während g) Erhalten neuer Betriebsdaten des Schweißroboters (200) und Erhalten neuer Bilddaten eines geschweißten Werkstücks und Verarbeiten der neu erhaltenen Betriebsdaten und der neu erhaltenen Bilddaten gemäß c) bis h).

4. Verfahren nach einem der vorhergehenden Ansprüche, wobei die Parameter des geschweißten Werkstücks die Art der Schweißung und/oder geometrische Parameter aufweisen, vorzugsweise die Breite der Schweißstelle und/oder die Eindringtiefe der Schweißstelle und/oder Kerben in der Schweißstelle und/oder Poren auf der Oberfläche und/oder in der Schweißstelle und/oder die für den Schweißvorgang aufgewendete Zeit aufweisen.

5. Verfahren nach einem der vorhergehenden Ansprüche, wobei die Bewertungsfunktion im Voraus festgelegt wird.

6. Verfahren nach einem der vorhergehenden Ansprüche, wobei die Bilddaten und/oder die Betriebsdaten unter Verwendung einer Filterung und/oder Vorverarbeitung verarbeitet werden; und
   wobei vorzugsweise simulierte Daten, die durch einen virtuellen Schweißvorgang erzeugt werden, verwendet werden, um die Bilddaten und/oder Betriebsdaten zu verarbeiten.

7. Verfahren nach einem der vorhergehenden Ansprüche, wobei die Bilddaten mit den Betriebsdaten, vorzugsweise vor dem Verarbeiten der Bilddaten, verknüpft werden.

8. Verfahren nach einem der vorhergehenden Ansprüche, wobei das Schweißen ein Laserschweißen ist.

9. Verfahren nach einem der vorhergehenden Ansprüche, wobei anschließend unter Verwendung der Parameter des geschweißten Werkstücks eine Art der Schweißstelle klassifiziert wird und eine Qualität der Art der Schweißstelle klassifiziert wird.

10. Verfahren nach einem der vorhergehenden Ansprüche, wobei die für die Bewertungsfunktion verwendeten Daten durch Simulation erzeugt werden.

11. System zur Steuerung eines Schweißroboters (200), wobei das System aufweist:

eine Kameraeinheit (101),
eine Auswerteeinheit (102),
eine Maschinenlerneinheit (103), und
eine Steuereinheit (104)
wobei die Kameraeinheit (101) konfiguriert ist, Bilddaten eines geschweißten Werkstücks (300) zu erfassen,
wobei die Auswerteeinheit (102) konfiguriert ist, die Bilddaten von der Kameraeinheit (101) zu erhalten, um Parameter des geschweißten Werkstücks (300) zu bestimmen und die Parameter zu verarbeiten, um eine Qualität des geschweißten Werkstücks (300) durch Bewerten der Parameter unter Verwendung einer Bewertungsfunktion zu bestimmen, wobei die Bewertungsfunktion eine verallgemeinerte gewichtete Bewertungsfunktion ist

$$S = \sum_{i=1,...,N} a_i(S_1, ..., S_N)S_i$$

wobei S ein Ergebnis der Bewertungsfunktion ist, $S_i$ die Parameter bezeichnet, $a_i$ einen jeweiligen Koeffizienten zum Gewichten des Parameters bezeichnet, und N die Anzahl der Parameter bezeichnet, wobei N eine ganze Zahl ist,
wobei die Maschinenlerneinheit (103) konfiguriert ist, Betriebsdaten des Roboters (200) zu erhalten, das Ergebnis der Bewertungsfunktion zu erhalten und das Ergebnis der Bewertungsfunktion auf die Betriebsdaten anzuwenden, um die Betriebsdaten zu modifizieren, um das Schweißen zu verbessern; und
wobei die Steuereinheit (104) konfiguriert ist, die modifizierten Betriebsdaten zu verwenden, um den Schweißroboter (200) zu steuern.

12. System nach Anspruch 11, wobei das Maschinenlernmodell ein verstärkendes Lern-, RL, Modell ist.

13. System nach Anspruch 11 oder 12, wobei die Auswerteeinheit (102) konfiguriert ist, die Qualität des geschweißten Werkstücks (300) abhängig von der Art der Schweißung und/oder geometrischen Parametern zu bestimmen, wobei die Auswerteeinheit (102) vorzugsweise konfiguriert ist, die Qualität des geschweißten Werkstücks (300) durch die Breite der Schweißstelle und/oder die Eindringtiefe der Schweißstelle und/oder das Vorhandensein von Kerben und/oder das Vorhandensein von Poren und/oder die für den Schweißvorgang aufgewendete Zeit zu bestimmen.

14. System nach einem der Ansprüche 11 bis 13, wobei die Kameraeinheit (101) konfiguriert ist, neue Bilddaten des geschweißten Werkstücks zu erfassen und die Maschinenlerneinheit (103) konfiguriert ist, neue Betriebsdaten des Roboters (200) zu erhalten, nachdem oder während die Steuereinheit die modifizierten Betriebsdaten verwendet hat, um den Schweißroboter (200) zu steuern,

wobei die Auswerteeinheit (102) konfiguriert ist, die neuen Bilddaten von der Kameraeinheit (101) zu erhalten, um geänderte Parameter des geschweißten Werkstücks (300) zu bestimmen, und die geänderten Parameter zu verarbeiten, um die Qualität des geschweißten Werkstücks (300) durch Bewerten der geänderten Parameter unter Verwendung der Bewertungsfunktion neu zu bestimmen,
wobei die Maschinenlerneinheit (103) konfiguriert ist, neue Betriebsdaten des Roboters (200) zu erhalten und die neuen Ergebnisse der Bewertungsfunktion zu erhalten, nachdem oder während die Steuereinheit die modifizierten Betriebsdaten verwendet hat, um den Schweißroboter (200) zu steuern, und das neue Ergebnis der Bewertungsfunktion auf die Betriebsdaten anzuwenden, um die Betriebsdaten erneut zu modifizieren, um das Schweißen zu verbessern; und
wobei die Steuereinheit (104) konfiguriert ist, die erneut modifizierten Betriebsdaten zu verwenden, um den Schweißroboter (200) zu steuern.

15. System nach einem der Ansprüche 11 bis 14, wobei die Bewertungsfunktion im Voraus festgelegt wird.

**Revendications**

1. Procédé assisté par ordinateur pour la commande d'un soudage effectué par un robot de soudage (200), ledit procédé comprenant :

a) l'obtention de données de fonctionnement du robot de soudage (200) pendant le soudage,

b) l'obtention de données d'image d'une pièce soudée,

c) le traitement des données d'image pour déterminer des paramètres de la pièce soudée,

d) le traitement des paramètres pour déterminer une qualité de la pièce soudée par évaluation des paramètres au moyen d'une fonction de notation, ladite fonction de notation étant une fonction de notation pondérée généralisée

$$S = \sum_{i=1,\ldots,N} a_i(S_1, \ldots, S_N)S_i$$

où S est un résultat de la fonction de notation, $S_i$ désigne les paramètres, $a_i$ désigne un coefficient respectif pour la pondération du paramètre, et N désigne le nombre de paramètres, N étant un entier, et

e) la saisie du résultat de la fonction de notation dans un modèle d'apprentissage automatique ;

f) l'application, au moyen du modèle d'apprentissage automatique, du résultat de la fonction de notation aux données de fonctionnement obtenues pour modifier les données de fonctionnement afin d'améliorer le soudage ; et

g) l'exploitation des données de fonctionnement modifiées afin de commander le robot de soudage (200).

2. Procédé selon la revendication 1, où le modèle d'apprentissage automatique est un modèle d'apprentissage par renforcement, RL.

3. Procédé selon la revendication 1 ou la revendication 2, comprenant en outre :

h) après ou pendant g), l'obtention de nouvelles données de fonctionnement du robot de soudage (200) et l'obtention de nouvelles données d'image d'une pièce soudée et le traitement les données de fonctionnement nouvellement obtenues et les données d'image nouvellement obtenues suivant c) à h).

4. Procédé selon l'une des revendications précédentes, où les paramètres de la pièce soudée comprennent le type de soudage et/ou des paramètres géométriques, comprennent préférentiellement la largeur de la soudure et/ou la profondeur de pénétration de la soudure et/ou les encoches dans la soudure et/ou les pores à la surface et/ou dans la soudure, et/ou le temps utilisé pour le processus de soudage.

5. Procédé selon l'une des revendications précédentes, où la fonction de notation est préalablement fixée.

6. Procédé selon l'une des revendications précédentes, où les données d'image et/ou les données de fonctionnement sont traitées par filtrage et/ou pré-traitement ; et

où des données préférentiellement simulées générées par un processus de soudage virtuel sont utilisées pour traiter les données d'image et/ou les données de fonctionnement.

7. Procédé selon l'une des revendications précédentes, où les données d'image sont associées aux données de fonctionnement, préférentiellement avant le traitement les données d'image.

8. Procédé selon l'une des revendications précédentes, où le soudage est un soudage par laser.

9. Procédé selon l'une des revendications précédentes, où un type de soudure est classifié et une qualité du type de soudure est classifiée en conséquence au moyen des paramètres de la pièce soudée.

10. Procédé selon l'une des revendications précédentes, où les données utilisées pour la fonction de notation sont générées par simulation.

11. Système pour la commande d'un robot de soudage (200), ledit système comprenant :

une unité de caméra (101),

une unité d'évaluation (102),

une unité d'apprentissage automatique (103), et

une unité de commande (104)

où l'unité de caméra (101) est prévue pour capturer des données d'image d'une pièce soudée (300),

où l'unité d'évaluation (102) est prévue pour obtenir les données d'image de l'unité de caméra (101) afin de déterminer des paramètres de la pièce soudée (300) et pour traiter les paramètres afin de déterminer une qualité de la pièce soudée (300) par évaluation des paramètres au moyen d'une fonction de notation,
où la fonction de notation est une fonction de notation pondérée généralisée

$$S = \sum_{i=1,\ldots,N} a_i(S_1, \ldots, S_N) S_i$$

où S est un résultat de la fonction de notation, $S_i$ désigne les paramètres, $a_i$ désigne un coefficient respectif pour la pondération du paramètre, et N désigne le nombre de paramètres, N étant un entier,
où l'unité d'apprentissage automatique (103) est prévue pour obtenir des données de fonctionnement du robot (200), pour obtenir le résultat de la fonction de notation et
appliquer le résultat de la fonction de notation aux données de fonctionnement afin de modifier les données de fonctionnement pour améliorer le soudage ; et
où l'unité de commande (104) est prévue pour exploiter les données de fonctionnement modifiées afin de commander le robot de soudage (200).

**12.** Système selon la revendication 11, où le modèle d'apprentissage automatique est un modèle d'apprentissage par renforcement, RL.

**13.** Système selon la revendication 11 ou la revendication 12, où l'unité d'évaluation (102) est prévue pour déterminer la qualité de la pièce soudée (300) en fonction du type de soudage et/ou de paramètres géométriques, où l'unité d'évaluation (102) est préférentiellement prévue pour déterminer la qualité de la pièce soudée (300) par la largeur de la soudure et/ou la profondeur de pénétration de la soudure et/ou la présence d'encoches, et/ou la présence de pores, et/ou le temps utilisé pour le processus de soudage.

**14.** Système selon l'une des revendications 11 à 13, où l'unité de caméra (101) est prévue pour capturer de nouvelles données d'image de la pièce soudée, et l'unité d'apprentissage automatique (103) est prévue pour obtenir de nouvelles données de fonctionnement du robot (200) après ou pendant l'utilisation par l'unité de commande des données de fonctionnement modifiées afin de commander le robot de soudage (200),

où l'unité d'évaluation (102) est prévue pour obtenir les nouvelles données d'image de l'unité de caméra (101) afin de déterminer des paramètres modifiés de la pièce soudée (300) et pour traiter les paramètres modifiés afin de redéterminer la qualité de la pièce soudée (300) par évaluation des paramètres modifiés au moyen de la fonction de notation, où l'unité d'apprentissage automatique (103) est prévue pour obtenir de nouvelles données de fonctionnement du robot (200) et pour obtenir les nouveaux résultats de la fonction de notation après ou pendant l'utilisation par l'unité de commande des données de fonctionnement modifiées afin de commander le robot de soudage (200), et appliquer le nouveau résultat de la fonction de notation aux données de fonctionnement afin de remodifier les données de fonctionnement pour améliorer le soudage ; et
où l'unité de commande (104) est prévue pour exploiter les données de fonctionnement remodifiées afin de commander le robot de soudage (200).

**15.** Système selon l'une des revendications 11 à 14, où la fonction de notation est préalablement fixée.

S101 — Obtain operating data of a welding robot

S102 — Obtain data images of a welded workpiece

S103 — Determine parameters of the welded workpiece

S104 — Rate the detected quality by a scoring function

S105 — Input the results of the scoring function into a machine learning model

S106 — Apply the results of the scoring function to modify operating data

S107 — Use modified operating data to control the welding robot

Figure 1

**Function**

*Score − S*

| S201 | S202 | S203 | S204 | S205 | S206 | S207 |

Image Data

Movement

Data

**Raw/Clean Data**

**Scenario Classification**

**Computer Vision of key parameters**

**Scoring Function**

**RL Agent**

*Robot instructions*

Layer 1 · Layer 2 · Layer 3 · Layer 4 · Layer 5

Figure 2

Instructions for laser-welding environment

S306

S307

**Agent**

Model

Optimal action value function Approx.

S304b

S305

**Scoring Function**

Geometry
Notches
Pores

Ex post Quality-Analysis

S303b
**Tracking**
Record states, actions and rewards

S303a
**AI/Computer Vision**
Edge detection
Classification of weld:
Deep learning based, deterministic

S304a

S301

RAW

Preprocessing, Filtering;

CLEAN

Simulated

S302

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017028499 A1